# EUROPEAN PATENT APPLICATION

(11) **EP 2 663 102 A2**
(43) Date of publication of application: **13.11.2013**
(21) Application number: 11795124.4
(22) Date of filing: 01.06.2011
(51) Int. Cl.: H04W 4/12

(54) **METHOD, SYSTEM AND SHORT MESSAGE SERVICES CENTER FOR SENDING SHORT MESSAGES**

(71) Applicant: Huawei Technologies Co., Ltd., Shenzhen, Guangdong 518129 (CN)
(72) Inventor: FAN, Jianbo, Shenzhen Guangdong 518129 (CN)
(74) Representative: Maiwald Patentanwalts GmbH
(86) International application number: PCT/CN2011/075084
(87) International publication number: WO 2011/157158

(57) **Abstract**

The present invention relates to the field of communications and discloses a method and a system for delivering a short message, and a short message service center. The method for delivering a short message includes: receiving and saving location information of a subscriber that is sent by a signaling detection server, where the subscriber is a subscriber in an MSC connected to the signaling detection server; receiving a short message sent by a calling subscriber; determining whether location information of a called subscriber is saved, where the location information includes an address of a first MSC where the called subscriber is currently located; and if yes, delivering the short message to the first MSC according to the location information of the called subscriber. According to the method provided in the present invention, when sending a short message, an SMSC is capable of querying location information of a called subscriber from the SMSC itself, and sending the short message by using a corresponding MSC without requiring a process of sending an SRI message to query subscriber location information, thereby saving a large number of signaling resources.

## Description

### TECHNICAL FIELD

The present invention relates to the field of communications, and in particular, to a method and a system for delivering a short message, and a short message service center.

### BACKGROUND

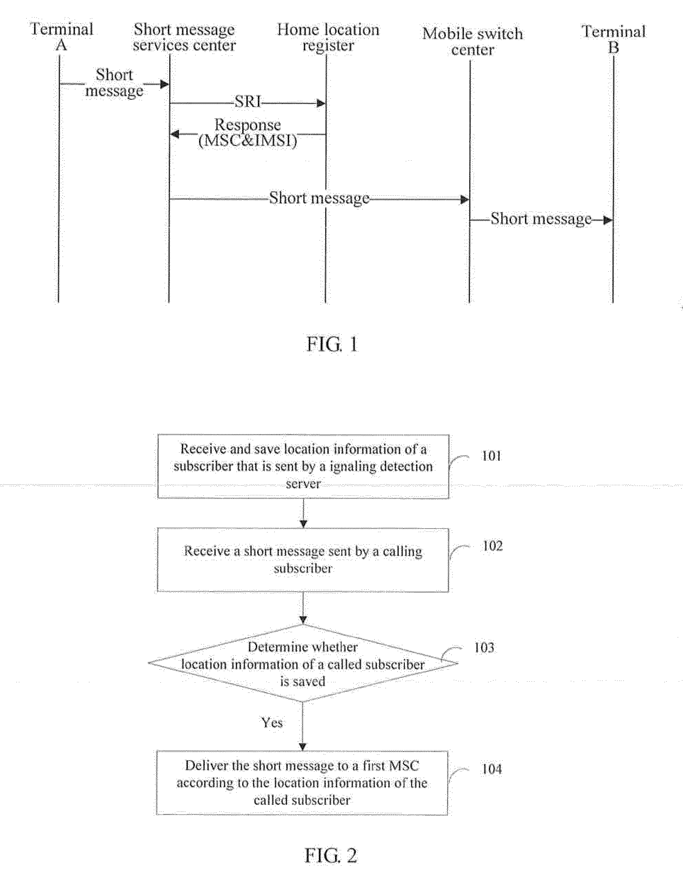

A short message service is a very common data service provided by each mobile carrier currently. An existing short message delivery process is shown in FIG. 1. A terminal A initiates a short message and submits the short message to an SMSC (Short Message Services Center, short message service center). After receiving a short message sending request, the SMSC sends an SRI message (Map-Send-Routing-Information-For-ShortMessage, short message routing information) to an HLR (Home Location Register, home location register) to query an MSC (Mobile Switch Center, mobile switching center) address and an IMSI number (International Mobile Subscriber Identification Number, international mobile subscriber identity number) of a terminal B of a called subscriber. The HLR returns the MSC address and the IMSI number of the terminal B to the SMSC, and the SMSC sends the short message to a corresponding MSC according to the MSC address and the IMSI and sends the short message to the terminal B by using the MSC. Then, the whole short message delivery process is completed.

As can be seen from the above, each message in the whole short message delivery process uses a signaling link. Before each short message is delivered, an SRI message needs to be sent in a signaling manner to query an MSC address and an IMSI number of a called subscriber. In addition, generally, a short message can reach the called subscriber only after it is delivered for multiple times because the called subscriber powers off or is not in a server or the like. As a result, too many signaling resources are used in the existing short message delivery process.

### SUMMARY

To solve the problem that exists in the prior art, embodiments of the present invention provide a method and a system for delivering a short message, and a short message service center. The technical solutions are as follows:

According to one aspect, the present invention provides a method for delivering a short message, including:
receiving and saving location information of a subscriber that is sent by a signaling detection server, where the subscriber is a subscriber in a mobile switch center (MSC) connected to the signaling detection server;
receiving a short message sent by a calling subscriber;
determining whether location information of a called subscriber is saved, where the location information of the called subscriber includes an address of a first MSC where the called subscriber is currently located; and
if yes, delivering the short message to the first MSC according to the location information of the called subscriber.

Furthermore, after the receiving and saving location information of a subscriber that is sent by a signaling detection server, the method further includes:
receiving and saving new location information of a first subscriber that is sent by the signaling detection server.

Furthermore, before the saving new location information of a first subscriber that is sent by the signaling detection server, the method further includes:
determining whether the saved location information of the first subscriber is the same as the new location information; and
if not, using the new location information to update the saved location information of the first subscriber.

Furthermore, the signaling detection server sends the new location information only when the signaling detection server determines that the new location information is different from the saved location information of the first subscriber.

Furthermore, after the delivering the short message to the first MSC according to the location information of the called subscriber, the method further includes:
determining whether the short message is successfully delivered; and
deleting, if the short message fails to be delivered, the saved location information of the called subscriber, acquiring location information of the called subscriber from a home location register HLR, where the location information of the called subscriber that is acquired from the HLR includes an address of a second MSC where the called subscriber is currently located and an IMSI of the called subscriber, delivering the short message to the second MSC according to the location information of the called subscriber that is acquired from the HLR, and returning to the step of determining whether the short message is successfully delivered until the short message is successfully delivered.

According to another aspect, the present invention provides a short message service center, including:
a first receiving module, configured to receive location information of a subscriber that is sent by a signaling detection server, where the subscriber is a subscriber in a mobile switch center (MSC) connected to the signaling detection server;
a saving module, configured to save the location information of the subscriber that is received by the first receiving module;
a second receiving module, configured to receive a short message sent by a calling subscriber;
a first determining module, configured to determine whether the saving module saves location information of a called subscriber to whom the short message is to be delivered, where the location information of the called subscriber includes an address of a first MSC where the called subscriber is currently located; and
a first delivering module, configured to deliver the short message to the first MSC according to the location information of the called subscriber when the first determining module determines that the saving module saves the location information of the called subscriber.

Furthermore, the short message service center further includes:
a third receiving module, configured to receive new location information of a first subscriber that is sent by the signaling detection server after the first receiving module receives and saves the location information of the subscriber that is sent by the signaling detection server; and
the saving module is further configured to save the new location information of the first subscriber that is received by the third receiving module.

Furthermore, the short message service center further includes:
a second determining module, configured to determine whether location information of the first subscriber that is saved by the saving module is the same as the new location information after the third receiving module receives the new location information of the first subscriber that is sent by the signaling detection server; and
the saving module is configured to use the new location information to update the saved location information of the first subscriber when the second determining module determines that the saved location information of the first subscriber is different from the new location information.

Furthermore, the short message service center further includes:
a third determining module, configured to determine whether the short message is successfully delivered after the first delivering module delivers the short message to the first MSC according to the location information of the called subscriber; and
a second delivering module, configured to delete the location information of the called subscriber that is saved by the saving module when the third determining module determines that the short message fails to be delivered, acquire location information of the called subscriber from an HLR, where the location information of the called subscriber that is acquired from the HLR includes an address of a second MSC where the called subscriber is currently located, and deliver the short message to the second MSC according to the location information of the called subscriber that is acquired from the HLR.

According to another aspect, the present invention further provides a communications system, including the short message service center provided in the embodiment of the present invention.

Beneficial effects of the technical solutions provided in the embodiments of the present invention are as follows: When sending a short message, an SMSC is capable of querying location information of a called subscriber from itself, and sending the short message by using a corresponding MSC without requiring a process of sending an SRI message to query subscriber location information, thereby saving a large number of signaling resources.

### BRIEF DESCRIPTION OF DRAWINGS

FIG. 1 is a flowchart of a method for delivering a short message in the prior art;

FIG. 2 is a flowchart of a method for delivering a short message according to Embodiment 1 of the present invention;

FIG. 3 is a schematic structural diagram of a short message delivering system to which a signaling server is added according to Embodiment 2 of the present invention;

FIG. 4 is a flowchart of a method for delivering a short message according to Embodiment 2 of the present invention;

FIG. 5 is a first schematic structural diagram of a short message service center according to Embodiment 3 of the present invention;

FIG. 6 is a second schematic structural diagram of a short message service center according to Embodiment 3 of the present invention;

FIG. 7 is a third schematic structural diagram of a short message service center according to Embodiment 3 of the present invention; and

FIG. 8 is a fourth schematic structural diagram of a short message service center according to Embodiment 3 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

As shown in FIG. 2, Embodiment 1 of the present invention provides a method for delivering a short message, including:

Step 101: Receive and save location information of a subscriber that is sent by a signaling detection server, where the subscriber is a subscriber in an MSC connected to the signaling detection server.

Step 102: Receive a short message sent by a calling subscriber.

Step 103: Determine whether location information of a called subscriber is saved, and if yes, perform step 103.

The location information includes an address of a first MSC where the called subscriber is currently located.

Step 104: Deliver the short message to the first MSC according to the location information of the called subscriber.

According to the method for delivering a short message that is provided in the embodiment of the present invention, when sending a short message, an SMSC is capable of querying location information of a called subscriber from itself, and sending the short message by using a corresponding MSC without requiring a process of sending an SRI message to query subscriber location information, thereby saving a large number of signaling resources.

### Embodiment 2

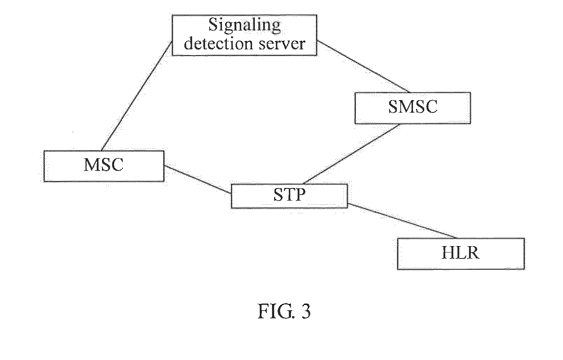

Embodiment 2 of the present invention provides a method for delivering a short message that is improved on the basis of Embodiment 1. As shown in FIG. 3, a signaling detection server is added between an MSC and an SMSC, so that the MSC and the SMSC are connected by the signaling detection server. In addition, the signaling detection server may be configured to synchronize subscriber location information stored in the MSC to the SMSC. The signaling detection server is deployed on a core network of a communications system and is capable of collecting, monitoring, and analyzing signaling.

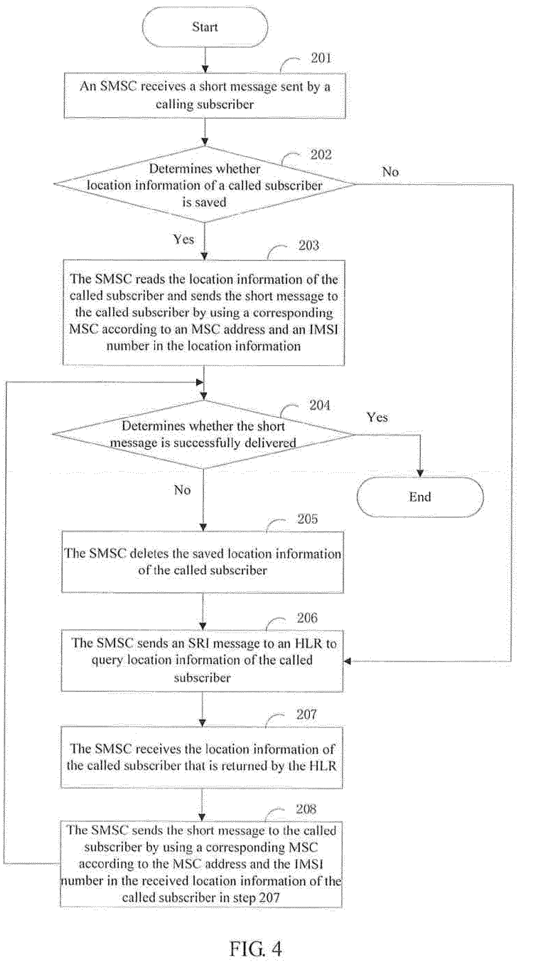

The detailed method is shown in FIG. 4, including:

Step 201: The SMSC receives a short message sent by a calling subscriber.

It should be noted that, before this step, the method further includes:
initializing the signaling detection server and synchronizing location information of all subscribers in the connected MSC to the SMSC.

In this embodiment, the subscriber location information synchronized to the SMSC by the signaling detection server may include an MSISDN (Mobile Station International ISDN Number, mobile station international ISDN number) of each subscriber, an IMSI number corresponding to the MSISDN, an address of an MSC where the subscriber is currently located, and information about an LAC (Location Area Code, location area code) where the subscriber is currently located. Details are described in Table 1.

**Table 1**

| **Name** | **Value** | **Remarks** |
|---|---|---|
| MSISDN | A mobile phone number | A mobile phone number of a subscriber to which 86 is added or not, such as 13627841986 |
| MSCID | An address of an MSC where the MSISDN is currently located | |
| IMSI | An IMSI number corresponding to the MSISDN | |
| LAC | An LAC where the MSISDN is currently located | |

It should be noted that, a signaling detection server may connect to one or more MSCs and synchronizes subscriber information stored in an MSC connected to the signaling detection server to an SMSC. In addition, preferably, the signaling detection server connects to the SMSC by using TCP (Transmission Control Protocol, Transmission Control Protocol)/IP (Internet Protocol, Internet Protocol), so that no signaling resource needs to be occupied during interaction between the signaling detection server and the SMSC.

Furthermore, after the signaling detection server synchronizes the location information of all subscribers in the MSC to the SMSC, the method may further include:
detecting whether a signaling message passes through the MSC, and reading, when a signaling message passes through the MSC, location information of a subscriber in the signaling message and sending the location information of the subscriber to the SMSC, so that the SMSC updates saved location information of the subscriber.

It should be noted that, this embodiment takes that the signaling detection server connects to the MSC by using an interface A of the MSC as an example for description.

Accordingly, the detecting whether a signaling message passes through the MSC is specifically as follows: The signaling detection server detects the interface A of the MSC and reads, when any signaling message passes through the interface A, location information of a subscriber in the signaling message.

In this embodiment, the subscriber location information of the subscriber that is saved in the SMSC specifically can be updated by using two methods:

Method 1: The signaling detection server compares the location information of the subscriber in the signaling message with location information of the subscriber that is saved in the signaling detection server itself, so as to determine whether the location information of the subscriber changes. If yes, the signaling detection server uses the location information of the subscriber in the signaling message to update the saved location information of the subscriber and sends the location information of the subscriber in the signaling message to the SMSC, so that the SMSC uses the location information of the subscriber in the signaling message to update the saved location information of the subscriber.

Method 2: The signaling detection server sends the location information of the subscriber in the signaling message to the SMSC, so that the SMSC uses the location information of the subscriber in the signaling message to overwrite the location information of the subscriber that is saved in the SMSC itself.

Step 202: The SMSC determines whether location information of a called subscriber is saved in the SMSC itself. If yes, perform step 303; and if not, perform step 306.

Step 203: The SMSC reads the location information of the called subscriber and sends the short message to the called subscriber by using a corresponding MSC according to an MSC address and an IMSI in the location information.

In this embodiment, the location information of the called subscriber that is read and obtained by the SMSC from itself may be an MSC address and an IMSI number of the called subscriber, where the location information of the called subscriber is location information obtained through synchronization by the signaling detection server. The subscriber location information of the called subscriber obtained by the SMSC is described in detail in Table 2.

**Table 2**

| **Name** | **Value** | **Remarks** |
|---|---|---|
| MSISDN | A mobile phone number | A mobile phone number of a subscriber to which 86 is added or not, such as 13627841986 |
| MSCID | An address of an MSC where the MSISDN is currently located | |
| IMSI | An IMSI number corresponding to the MSISDN | |

Accordingly, the delivering, by the SMSC, the short message to the called subscriber by using a corresponding MSC is specifically as follows:

The SMSC obtains an address of an MSC where the called subscriber is located and sends the short message to the MSC, so that the MSC sends the short message to the called subscriber.

Step 204: The SMSC determines whether the short message is successfully delivered, and if not, perform step 205.

The determining, by the SMSC, whether the short message is successfully delivered is specifically as follows: When the called subscriber receives the short message, the called subscriber returns an ACK that indicates a success in receiving the short message to a corresponding MSC. After receiving the ACK that indicates a success in receiving the short message and is returned by the called subscriber, the MSC returns to the SMSC an ACK that indicates a success in delivering the short message.

Step 205: The SMSC deletes the saved location information of the called subscriber and performs step 206.

If the short message fails to be delivered to the called subscriber, it indicates that the saved location information of the called subscriber is incorrect. In this case, the saved location information of the called subscriber is deleted, so as to avoid that the short message fails to be delivered to the called subscriber again.

Step 206: The SMSC sends an SRI message to an HLR to query location information of the called subscriber.

Step 207: The SMSC receives the location information of the called subscriber that is returned by the HLR.

The location information of the called subscriber that is returned by the HLR may include an MSC address and an IMSI number of the called subscriber.

In an embodiment of the present invention, after receiving the location information of the called subscriber that is returned by the HLR, the SMSC is capable of saving the location information of the called subscriber.

Step 208: The SMSC sends, according to the MSC address and the IMSI in the received location information of the called subscriber in step 207, the short message to the called subscriber by using a corresponding MSC and returns to step 204 until the short message is successfully delivered.

According to the method for delivering a short message that is provided in Embodiment 2 of the present invention, when sending a short message, an SMSC is capable of querying location information of a called subscriber from itself, and sending the short message by using a corresponding MSC without requiring a process of sending an SRI message to query subscriber location information, thereby saving a large number of signaling resources.

### Embodiment 3

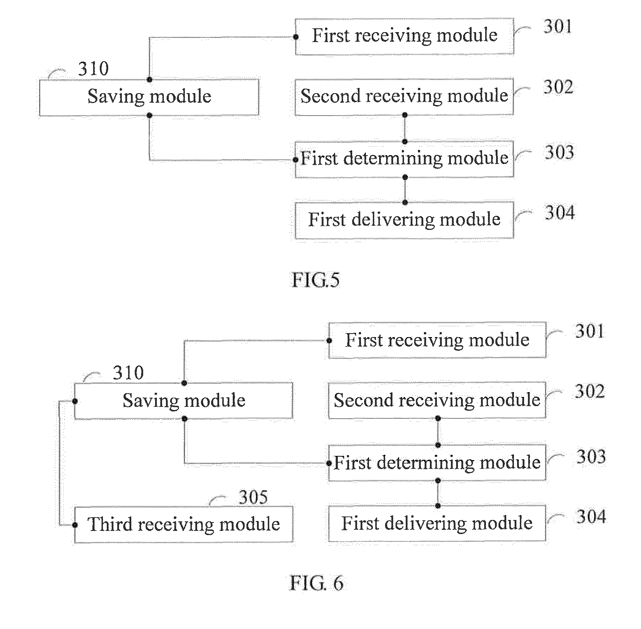

This embodiment provides a short message service center. As shown in FIG. 5, the short message service center includes:
a first receiving module 301, configured to receive location information of a subscriber that is sent by a signaling detection server, where the subscriber is a subscriber in an MSC connected to the signaling detection server;
a saving module 310, configured to save the location information of the subscriber that is sent by the signaling detection server and received by the receiving module 301;
a second receiving module 302, configured to receive a short message sent by a calling subscriber;
a first determining module 303, configured to determine whether the saving module 310 saves location information of a called subscriber to whom the short message received by the second receiving module 302 is to be delivered, where the location information includes an address of a first MSC where the called subscriber is currently located; and
a first delivering module 304, configured to deliver the short message to the first MSC according to the location information of the called subscriber when the first determining module 303 determines that the saving module 310 saves the location information of the called subscriber.

Furthermore, as shown in FIG. 6, the short message service center further includes:
a third receiving module 305, configured to receive and save new location information of a first subscriber that is sent by the signaling detection server after the first receiving module 301 receives the location information of the subscriber that is sent by the signaling detection server; and
the saving module 310 may further be configured to save the new location information of the first subscriber that is received by the third receiving module 305. Specifically, the saving module 310 may use the new location information of the first subscriber to update the saved location information of the first subscriber.

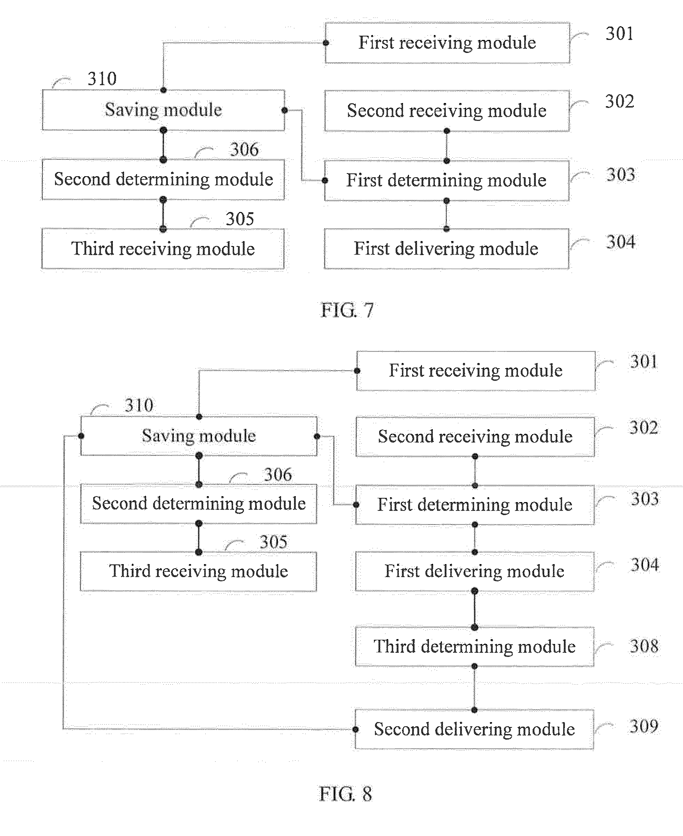

Furthermore, as shown in FIG. 7, the short message service center further includes:
a second determining module 306, configured to determine whether the saved location information of the first subscriber is the same as the new location information before the saving module 310 saves the new location information of the first subscriber that is sent by the signaling detection server; and
the saving module 310 is configured to use the new location information of the first subscriber to update the saved location information of the first subscriber when the second determining module 306 determines that the saved location information of the first subscriber is different from the new location information of the first subscriber.

Furthermore, as shown in FIG. 8, the short message service center further includes:
a third determining module 308, configured to determine whether the short message is successfully delivered after the first delivering module 301 delivers the short message to the first MSC according to the location information of the called subscriber; and
a second delivering module 309, configured to delete the location information of the called subscriber that is saved by the saving module 310 when the third determining module 308 determines that the short message fails to be delivered, acquire location information of the called subscriber from an HLR, where the location information of the called subscriber that is acquired from the HLR includes an address of a second MSC where the called subscriber is currently located and an IMSI of the called subscriber, deliver the short message to the second MSC according to the location information of the called subscriber that is acquired from the HLR, and return, to the third determining module 308, an instruction of determining whether the short message is successfully delivered until the short message is successfully delivered.

The short message service center provided in the embodiment of the present invention is capable of querying location information of a called subscriber from the short message service center itself, and sending the location information by using a corresponding MSC without requiring a process of sending an SRI message to query subscriber location information, thereby saving a large number of signaling resources.

It should be noted that, the short message services center provided in the above embodiment uses only division of the above functional modules as an example for description. In practical application, the functions may be assigned to different functional modules for implementation as required. That is to say, the internal structure of the system is divided into different functional modules to implement all or a part of the functions described above. In addition, the short message service center provided in the above embodiment and the method embodiment for delivering a short message fall under a same concept. For specific implementation procedures, refer to the method Embodiment 2. Details are not repeated herein.

An embodiment of the present invention further provides a communications system, including the short message service center provided in the embodiment of the present invention.

Serial numbers of the above embodiments of the present invention are only used for description, but do not indicate preference of the embodiments.

All or a part of the content of the technical solutions provided in the embodiments may be implemented by software programming. A software grogram of the technical solutions is stored in a readable storage medium, such as a hard disk, an optical disk, or a floppy disk of a computer.

The foregoing descriptions are merely exemplary embodiments of the present invention, but are not intended to limit the present invention. Any modification, equivalent replacement, or improvement derived within the spirit and principle of the present invention shall fall within the protection scope of the present invention.

## Claims

1. A method for delivering a short message, comprising:
receiving and saving location information of a subscriber that is sent by a signaling detection server, wherein the subscriber is a subscriber in a mobile switch center (MSC) connected to the signaling detection server;
receiving a short message sent by a calling subscriber;
determining whether location information of a called subscriber is saved, wherein the location information of the called subscriber comprises an address of a first MSC where the called subscriber is currently located; and
if yes, delivering the short message to the first MSC according to the location information of the called subscriber.

2. The method according to claims 1, after the receiving and saving location information of a subscriber that is sent by a signaling detection server, further comprising:
receiving and saving new location information of a first subscriber that is sent by the signaling detection server.

3. The method according to claim 2, before the saving new location information of a first subscriber that is sent by the signaling detection server, further comprising:
determining whether the saved location information of the first subscriber is the same as the new location information; and
if not, using the new location information to update the saved location information of the first subscriber.

4. The method according to claim 2, wherein the signaling detection server sends the new location information only when the signaling detection server determines that the new location information is different from the saved location information of the first subscriber.

5. The method according to any one of claims 1 to 4, after the delivering the short message to the first MSC according to the location information of the called subscriber, further comprising:
determining whether the short message is successfully delivered; and
deleting, if the short message fails to be delivered, the saved location information of the called subscriber, acquiring location information of the called subscriber from a home location register (HLR), wherein the location information of the called subscriber that is acquired from the HLR comprises an address of a second MSC where the called subscriber is currently located and an IMSI of the called subscriber, delivering the short message to the second MSC according to the location information of the called subscriber that is acquired from the HLR, and returning to the step of determining whether the short message is successfully delivered until the short message is successfully delivered.

6. A short message service center, comprising:
a first receiving module, configured to receive location information of a subscriber that is sent by a signaling detection server, wherein the subscriber is a subscriber in a mobile switch center (MSC) connected to the signaling detection server;
a saving module, configured to save the location information of the subscriber that is received by the first receiving module;
a second receiving module, configured to receive a short message sent by a calling subscriber;
a first determining module, configured to determines whether the saving module saves location information of a called subscriber to whom the short message is to be delivered, wherein the location information of the called subscriber comprises an address of a first MSC where the called subscriber is currently located; and
a first delivering module, configured to deliver the short message to the first MSC according to the location information of the called subscriber when the first determining module determines that the saving module saves the location information of the called subscriber.

7. The short message service center according to claim 6, further comprising:
a third receiving module, configured to receive new location information of a first subscriber that is sent by the signaling detection server after the first receiving module receives and saves the location information of the subscriber that is sent by the signaling detection server; wherein
the saving module is further configured to save the new location information of the first subscriber that is received by the third receiving module.

8. The short message service center according to claim 7, further comprising:
a second determining module, configured to determines whether location information of the first subscriber that is saved by the saving module is the same as the new location information after the third receiving module receives the new location information of the first subscriber that is sent by the signaling detection server; wherein
the saving module is configured to use the new location information to update the saved location information of the first subscriber when the second determining module determines that the saved location information of the first subscriber is different from the new location information.

9. The short message service center according to any one of claims 6 to 8, further comprising:
a third determining module, configured to determine whether the short message is successfully delivered after the first delivering module delivers the short message to the first MSC according to the location information of the called subscriber; and
a second delivering module, configured to delete the location information of the called subscriber that is saved by the saving module when the third determining module determines that the short message fails to be delivered, acquire location information of the called subscriber from an HLR, wherein the location information of the called subscriber that is acquired from the HLR comprises an address of a second MSC where the called subscriber is currently located, and deliver the short message to the second MSC according to the location information of the called subscriber that is acquired from the HLR.

10. A communications system, comprising the short message service center according to any one of claims 6 to 9.
